# FASCICULE DE BREVET EUROPEEN

(11) **EP 0 491 617 B1**
(45) Date de publication et mention de la délivrance du brevet: **15.03.1995**
(21) Numéro de dépôt: 91403418.6
(22) Date de dépôt: 17.12.1991
(51) Int. Cl.: H02G 9/02

(54) **Assemblage de câbles disposé dans une tranchée et un procédé de pose d'un assemblage de câbles dans une tranchée**
Kabelzusammenbau in einem Graben und ein Verlegungsverfahren eines Kabelzusammenbaus in einen Graben
Cable assembly in a trench and a laying-process of a cable assembly in a trench

(30) Priorité: 18.12.1990 FR 9015827
(43) Date de publication de la demande: 24.06.1992
(73) Titulaire: SOCIETE INDUSTRIELLE DE LIAISONS ELECTRIQUES - SILEC, F-75008 Paris (FR)
(72) Inventeur: Sacher, Jacques, F-77250 Veneux les Sablons (FR)
(74) Mandataire: Fruchard, Guy

(56) Documents cités:
- EP-A- 0 238 052
- GB-A- 2 027 553
- US-A- 3 940 832

## Description

La présente invention concerne un assemblage de câbles disposé dans une tranchée et un procédé de pose d'un assemblage de câbles dans une tranchée, notamment bien que non exclusivement des câbles haute tension.

Lorsqu'on souhaite disposer des câbles dans une tranchée, notamment pour enterrer des câbles de transport d'électricité, qu'il s'agisse de câbles de moyenne tension ou de câbles haute tension, il arrive que l'on assemble les câbles entre eux par des dispositifs de maintien indépendants des câbles disposés de façon ponctuelle ou continue le long de l'assemblage de câbles.

Devant le développement croissant de la mise en souterrain des câbles de transport d'électricité, on a recherché des solutions plus économiques que les solutions habituelles consistant à déposer les câbles dans une tranchée large accessible à des ouvriers de terrassement. On a pour cela proposé différents moyens pour réaliser une tranchée étroite dans laquelle un assemblage de câbles est disposé simultanément à la réalisation de la tranchée, laquelle est immédiatement remblayée. Jusqu'à présent ce mode de pose a été réservé aux câbles moyenne tension pour lesquels on admet qu'il est suffisant de protéger l'assemblage de câbles en déposant une couche de sable dans le fond de la tranchée. Le dépôt d'une couche de sable au moment de la réalisation d'une tranchée étroite ne pose en soi aucun problème.

Au contraire, pour les câbles haute tension, il est nécessaire de prévoir une protection accrue contre les risques de détérioration des gaines protectrices et de garantir un environnement thermique contrôlé pour les câbles. Il est donc généralement exigé dans le cas d'une pose en pleine terre que les assemblages de câbles haute tension soient enrobés dans un mortier. Le mortier nécessite un temps de séchage et, avant séchage, le mortier n'est pas apte à supporter le poids d'un assemblage de câbles. Dans la technique actuelle, on réalise donc en général une tranchée large dans le fond de laquelle un radier de béton est déposé et laissé sécher avant d'effecuter le dépôt de l'assemblage de câbles.

Un but de l'invention est de proposer un assemblage de câbles et un procédé de pose permettant de poser l'assemblage de câbles en continu dans une tranchée étroite même lorsque l'assemblage de câbles comporte des câbles haute tension devant être particulièrement protégés contre les risques de détérioration.

En vue de la réalisation de ce but, on propose selon l'invention un assemblage de câbles disposé dans une tranchée, caractérisé en ce qu'il comporte au moins un tronçon de profilé associé aux câbles et disposé pour présenter une partie de surface en saillie par rapport à l'assemblage de câbles et tournée vers le fond de la tranchée.

Ainsi, l'assemblage de câbles est convenablement protégé du sol sans qu'il soit nécessaire de réaliser un radier préalablement à la mise en place de l'assemblage de câbles et le profilé assure alors un espacement suffisant de l'assemblage de câbles par rapport au fond de la tranchée pour permettre un dépôt de mortier autour de l'assemblage de câbles sans risquer que l'assemblage de câble ne s'enfonce jusqu'à une distance inférieure à la distance autorisée.

Selon une version avantageuse de l'invention, le profilé est un profilé creux. Ainsi, on peut disposer dans le profilé un câble de communication tel qu'un câble de télécommande basse tension ou un câble à fibres optiques. On peut également disposer dans le profilé un câble de liaison des mises à la terre des jonctionnements des câbles haute tension.

Selon un autre aspect de l'invention, on prévoit un procédé de pose d'un assemblage de câbles dans une tranchée caractérisé en ce qu'il comporte les étapes de : réaliser une tranchée, réaliser un assemblage de câbles en lui associant au moins un tronçon de profilé disposé pour présenter une partie de surface en saillie par rapport à l'assemblage de câbles sur un côté constant de celui-ci, et poser l'assemblage de câble dans la tranchée avec la partie de surface en saillie tournée vers le fond de la tranchée.

D'autres avantages de l'invention apparaîtront à la lecture de la description qui suit de modes de réalisation particuliers non limitatifs de l'invention en liaison avec les dessins ci-joints parmi lesquels :
- la figure 1 est une vue en perspective partielle d'un assemblage de câbles selon un premier mode de réalisation de l'invention,
- la figure 2 est une vue en perspective partielle d'un assemblage de câbles selon un second mode de réalisation de l'invention,
- la figure 3 est une vue en perspective partielle d'un assemblage de câbles selon un troisième mode de réalisation de l'invention,
- la figure 4 est une vue en perspective, en coupe d'une tranchée au moment de la mise en place d'un câble selon l'invention.

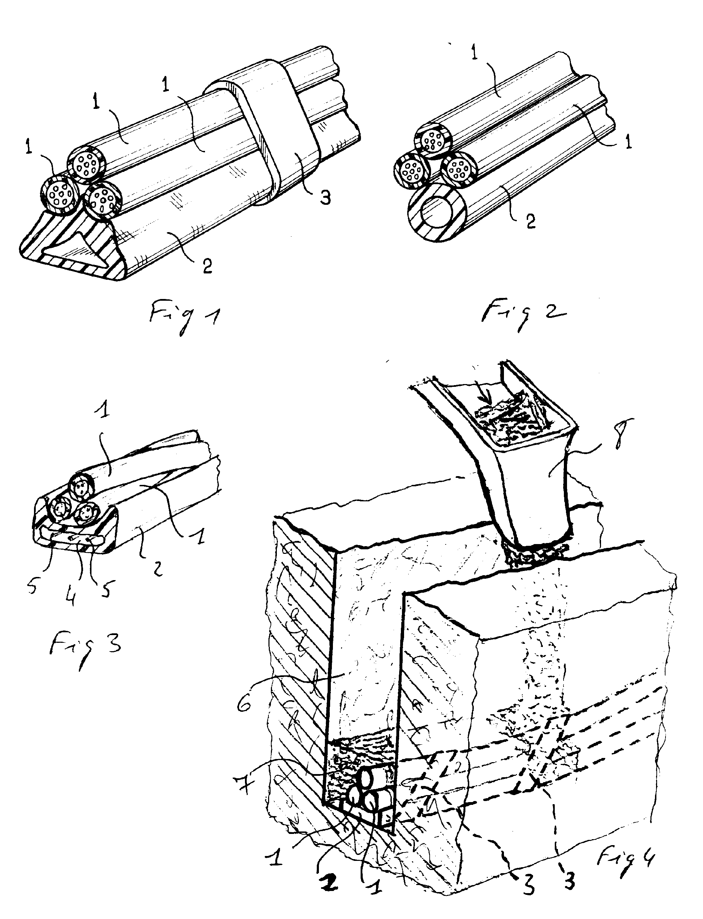

En référence à la figure 1, l'assemblage comporte trois câbles 1 associés à un profilé creux ayant une section sensiblement triangulaire au moyen d'un ruban de frettage 3. Le profilé 2 s'étend sur un côté constant de l'assemblage de câbles et comporte une partie de surface en saillie par rapport à l'assemblage de câbles.

Dans ce mode de réalisation, les côtés de triangle tournés vers les câbles 1 ont de préférence une forme épousant partiellement un contour externe de deux câbles afin que ceux-ci soient fermement maintenus sur le profilé lors du frettage par le ruban 3 et n'aient pas tendance à descendre le long du profilé.

Dans ce cas, la semelle du profilé est à une distance de la génératrice inférieure des câbles 1 égale à la distance requise pour assurer une protection de sorte que lors du coulage d'un mortier autour de l'assemblage de câbles après mise en place de celui-ci dans une tranchée, cette distance de sécurité se trouve maintenue jusqu'à la prise en masse du mortier.

Dans le mode de réalisation de la figure 2, l'assemblage comporte de la même façon que précédemment trois câbles 1 qui sont associés à un profilé 2 ayant cette fois une section circulaire.

Dans un cas comme dans l'autre, l'assemblage de câbles et son association avec le profilé flexible est de préférence réalisé au moment de la pose de l'assemblage à partir de bobines comportant d'une part les câbles 1 et d'autre part le profilé 2. Bien entendu un guidage soigné sera assuré afin d'éviter une rotation de l'assemblage de câbles au moment de la pose, ce qui amènerait l'un des câbles 1 dans le fond de la tranchée et provoquerait une perte de la sécurité assurée par le profilé.

Dans le cas des figures 1 et 2 les câbles 1 sont disposés parallèlement les uns aux autres. La figure 3 illustre un autre mode de réalisation dans lequel la surface supérieure du profilé 2 a une forme en U et peut donc recevoir un assemblage de câbles torsadé sans risque de mettre les câbles en contact avec le sol.

Dans ce mode de réalisation on a également représenté des câbles de commande 5, par exemple des câbles à fibre optique disposés dans la cavité du profilé 1.

La figure 4 illustre le procédé de pose selon l'invention. Selon ce procédé on réalise tout d'abord une tranchée 6, de préférence une tranchée étroite, par tout moyen approprié connu en soi. En particulier dans le cas d'une tranchée étroite on peut utiliser une machine existante habituellement destinée à réaliser des tranchées étroites pour les câbles moyenne tension. Au fur et à mesure de la réalisation de la tranchée 6 on dispose dans la tranchée un assemblage de câbles tel que décrit ci-dessus avec le profilé 2 tourné vers le fond de la tranchée. On notera que l'assemblage de câbles peut être réalisé à l'avance ou sur le chantier au moment de la pose. Dans ce dernier cas on peut utiliser une machine habituellement utilisée pour la pose de câbles moyenne tension en disposant le profilé sur une des bobines habituellement utilisée pour un câble.

Une fois que l'assemblage de câbles est disposé dans la tranchée 6, on coule dans la tranchée un matériau de protection 7, par exemple un béton maigre, au moyen d'une goulotte 8 fixée à un véhicule se déplaçant derrière la machine de pose de l'assemblage de câbles. il est alors possible de remblayer immédiatement la tranchée 6, le béton 7 même humide ayant une cohésion suffisante pour qu'il n'y ait pas de pénétration du matériau de remblayage dans le béton. Le cas échéant on peut d'ailleurs recouvrir le béton d'un film en matière plastique formant une séparation entre le béton et le matériau de remblayage.

On peut réaliser un profilé ayant toute forme adaptée en fonction de la rigidité souhaitée et du poids des câbles.

Par ailleurs, bien que l'invention soit plus particulièrement destinée à la pose de câbles haute tension dans une tranchée étroite, l'assemblage de câbles selon l'invention peut être utilisé pour la pose de câbles dans une tranchée large ainsi que pour la pose de câbles de moyenne tension.

On remarquera également que le profilé 2 ne s'étend pas nécessairement sur toute la longueur de l'assemblage de câbles. Dans le cas de segments de profilé, il suffit que les segments aient une rigidité suffisante pour assurer un maintien du câble à la distance convenable du fond de la tranchée. Dans ce cas les segments de profilés peuvent même être totalement rigides bien que cette disposition ne soit pas privilégiée en raison des difficultés qu'elle présente pour sa mise en place.

## Revendications

1. Assemblage de câbles (1) disposé dans une tranchée, caractérisé en ce qu'il comporte au moins un tronçon de profilé (2) associé aux câbles et disposé pour présenter une partie de surface en saillie par rapport à l'assemblage de câbles et tournée vers le fond de la tranchée.

2. Assemblage de câbles selon la revendication 1, caractérisé en ce que le profilé (2) est un profilé flexible.

3. Assemblage de câbles selon la revendication 1 ou la revendication 2, caractérisé en ce que le profilé (2) est un profilé creux.

4. Assemblage de câbles selon la revendication 3 caractérisé en ce que le profilé est continu et en ce que des câbles (5) sont disposés dans le profilé (2).

5. Assemblage de câbles selon l'une des revendications 1 à 4, caractérisé en ce que le profilé (2) a une forme sensiblement triangulaire dont la pointe est engagée entre deux câbles (1).

6. Assemblage de câbles selon la revendication 5, caractérisé en ce que les côtés du profilé ont une forme similaire à une partie du contour extérieur des câbles.

7. Assemblage de câbles selon l'une des revendications 1 à 6, caractérisé en ce qu'il est enrobé dans un matériau de protection (7).

8. Procédé de pose d'un assemblage de câbles dans une tranchée caractérisé en ce qu'il comporte les étapes de: réaliser une tranchée (6), réaliser un assemblage de câbles en lui associant au moins un tronçon de profilé (2) disposé pour présenter une partie de surface en saillie par rapport à l'assemblage de câbles sur un côté constant de celui-ci, et poser l'assemblage de câble dans la tranchée (6) avec la partie de surface en saillie tournée vers le fond de la tranchée.

9. Procédé selon la revendication 8, caractérisé en ce qu'il comporte en outre l'étape de couler un matériau de protection (7) autour de l'assemblage de câbles après dépôt de celui-ci dans la tranchée.

10. Procédé selon la revendication 9, caractérisé en ce que le matériau de protection (7) est un béton maigre.

## Patentansprüche

1. Kabelverband (1), der in einem Graben verlegt ist, gekennzeichnet durch zumindest einen Profilabschnitt (2), der den Kabeln zugeordnet und so gebildet ist, daß ein Teil der Oberfläche in bezug auf den Kabelverband hervortritt und dem Boden des Grabens zugekehrt ist.

2. Kabelverband nach Anspruch 1, dadurch gekennzeichnet, daß das Profil (2) ein flexibles Profil ist.

3. Kabelverband nach Anspruch 1 oder 2, dadurch gekennzeichnet, daß das Profil (2) ein Hohlprofil ist.

4. Kabelverband nach Anspruch 3, dadurch gekennzeichnet, daß das Profil kontinuierlich ist und daß die Kabel (5) in dem Profil (2) angeordnet sind.

5. Kabelverband nach einem der Ansprüche 1 bis 4, dadurch gekennzeichnet, daß das Profil (2) eine im wesentlichen dreieckige Form hat, deren Spitze zwischen zwei Kabel (1) tritt.

6. Kabelverband nach Anspruch 5, dadurch gekennzeichnet, daß die Seiten des Profils eine einem Teil der äußeren Kontur der Kabel entsprechende Form haben.

7. Kabelverband nach einem der Ansprüche 1 bis 6, dadurch gekennzeichnet, daß dieser mit einem Schutzmaterial (7) ummantelt ist.

8. Verfahren zum Verlegen eines Kabelverbandes in einem Graben, gekennzeichnet durch den Schritt der Herstellung eines Grabens, den Schritt der Herstellung eines Kabelverbandes, wobei diesem zumindest ein Profilabschnitt (2) zugeordnet wird, der so angeordnet ist, daß ein Bereich seiner Oberfläche auf einer gleichbleibenden Seite des Kabelverbandes gegenüber diesem hervortritt, und den Schritt der Anordnung des Kabelverbandes in dem Graben (6), wobei der hervortretende Oberflächenbereich dem Boden des Grabens zugekehrt ist.

9. Verfahren nach Anspruch 8, dadurch gekennzeichnet, daß in einem weiteren Schritt nach der Verlegung des Kabelverbandes in dem Graben ein Schutzmaterial (7) um den Kabelverband herum vergossen wird.

10. Verfahren nach Anspruch 9, dadurch gekennzeichnet, daß das Schutzmaterial (7) Magerbeton ist.

## Claims

1. Cables assembly (1) disposed in a trench, characterised in that it comprises at least one shaped member portion (2) associated with said cables and disposed with a surface portion protruding from said cables assembly and turned to the trench bottom.

2. Cables assembly according to claim 1, characterised in that said shaped member (2) is a flexible member.

3. Cables assembly according to claim 1 or claim 2, characterised in that said shaped member (2) is a hollow member.

4. Cables assembly according to claim 3, characterised in that said shaped member is continuous and in that said cables (5) are disposed in said shaped member (2).

5. Cables assembly according to one of claims 1 to 4, characterised in that said shaped member (2) has a substantially triangular form the top of which is engaged between two cables (1).

6. Cables assembly according to claim 5, characterised in that sides of said shaped member have a form similar to a portion of the external contour of said cables.

7. Cables assembly according to one of claims 1 to 6, characterised in that it is covered with a protecting material (7).

8. Process for laying a cables assembly in a trench, characterised in that it comprises steps of : realizing a trench (6), realizing a cables assembly by associating to it at least one shaped member portion (2) disposed with a surface portion protruding from said cables assembly on a constant side, and laying said cables assembly into said trench (6) with said protruding surface portion turned to the trench bottom.

9. Process according to claim 8, characterised in that it further comprises the step of pouring a protecting material (7) around said cables assembly after laying it into said trench.

10. Process according to claim 9, characterised in that said protecting material (7) is a lean concrete.
